# EUROPÄISCHE PATENTANMELDUNG

(11) **EP 0 718 351 A1**
(43) Veröffentlichungstag der Anmeldung: **26.06.1996**
(21) Anmeldenummer: 95120420.5
(22) Anmeldetag: 22.12.1995
(51) Int. Cl.: C08K 5/04

(54) **Neue Zusätze zu Kunststoffen, insbesondere zu PVC**

(30) Priorität: 22.12.1994 DE 4446059
(71) Anmelder: BASF AKTIENGESELLSCHAFT, D-67056 Ludwigshafen (DE)
(72) Erfinder: Meixner, Hubert, Dr., D-67069 Ludwigshafen (DE); Reuther, Wolfgang, Dr., D-69118 Heidelberg (DE); Königstein, Volker, Dr., D-67133 Maxdorf (DE)
(74) Vertreter: Geissler, Bernhard, Dr. jur., Dipl.-Phys.

(57) **Zusammenfassung**

Oxoöle können als Zusatz zu Kunststoffen, insbesondere zu einem chloridhaltigen Kunststoff, vorzugsweise PVC, als Teil von Flüssigstabilisatorzusammensetzungen verwendet werden.

## Beschreibung

Die vorliegende Erfindung bezieht sich auf eine neue Verwendung von Oxoölen. Insbesondere bezieht sich die vorliegenden Erfindung auf Zusätze zu Kunststoffen, vor allem PVC. Schließlich betrifft die vorliegende Erfindung ein Zusatzmittel für solche Kunststoffe wie PVC oder andere halogenhaltige Kunststoffe.

Die Stabilisierung thermoplastischer Kunststoffe, insbesondere halogenhaltiger thermoplastischer Kunststoffe wie z. B. chlorhaltige thermoplastische Kunststoffe und insbesondere Polyvinylchlorid (PVC) ist ein breites und bedeutendes Gebiet der chemischen Forschung und Entwicklung. Zahlreiche Zusätze zu Kunststoffen mit unterschiedlichen Wirkungsrichtungen wurden entwickelt. Weichmacher, Antioxidanzien, flammhemmende Mittel sind einige Beispiele von Zusätzen.

Kunststoffe und insbesondere PVC werden heute häufig durch Einbringen von Flüssigstabilisatoren zu Produkten verarbeitet, die dann in Folien, Spritzgußteilen und dgl. weiterverarbeitet werden, ohne daß sich diese Materialien bei der Verarbeitung hinsichtlich ihres Aussehens und/oder hinsichtlich der Eigenschaften der Endprodukte signifikant verschlechtern.

Bei der Stabilisierung von Kunststoffen treten häufig eines oder mehrere der folgenden Probleme bzw. Nachteile auf:
- Bestandteile der Stabilisatorrezepturen, insbesondere Lösungsmittel und Weichmacher, treten aus der Oberfläche der Kunststoffmaterialien aus, sog. "Ausdunsten".
- Auf der Oberfläche der Kunststoffe, insbesondere auf der Oberfläche fertiger PVC-Produkte, bilden sich Schmierfilme.
- Die Bedruckbarkeit der Kunststoffoberflächen ist erschwert.
- Aufgedruckte Schriften diffundieren aus.
- Aufgedruckte Schriften verschwimmen.
- Die Beklebbarkeit von Kalanderfolien ist schlecht.
- Kalanderprodukte sind schlecht verschweißbar, insbesondere nach längerer Lagerzeit.
- Zusätze mit Flammpunkten unter einem relativ niedrigen Wert, in Deutschland typischerweise mit einem Flammpunkt unter 56 °C, sind kennzeichnungspflichtig, wodurch niedersiedende Lösemittel in Stabilisatorenzusammensetzungen zu einer verringerten Akzeptanz fuhren.

Eine der Aufgaben der vorliegenden Erfindung besteht daher darin, Stabilisatorzusatzmittel für Kunststoffe anzugeben, die einen oder mehrere der oben genannten Nachteile entweder überhaupt nicht mehr aufweisen, oder diese Nachteile nur zu einem geringen Maße zeigen. Insbesondere ist es eine Aufgabe der vorliegenden Erfindung, eine Stabilisatorzusammensetzung anzugeben, die lösungsmittelfrei ist und dennoch als Flüssigstabilisator verarbeitet werden kann.

Diese Aufgabe wird erfindungsgemäß durch eine Stabilisatorzusammensetzung bzw. einen Zusatz für Kunststoffe gelöst, der (die) durch einen signifikanten Anteil an Oxoöl gekennzeichnet ist. Vorzugsweise enthält der erfindungsgemäße Zusatz 5-70 Gewichtsteile Oxoöl, 1-30 Gewichtsteile Alkali- und/oder Erdalkalisalze sowie Salze von Zink und/oder Cadmium bzw. Aluminium von organischen Säuren mit 8-18 C-Atomen, 0,5-5 Gewichtsteile Antioxidanzien, 5-30 Gewichtsteile Weichmacher und 5-50 Gewichtsteile organisches Phosphit. Weitere bevorzugte Zusammensetzungen der erfindungsgemäßen Zusätze bzw. der erfindungsgemäßen Stabilisatorzusammensetzungen sind in den Ansprüchen sowie den folgenden Beispielen gekennzeichnet.

Es ist bekannt, Oxoöle als Zwischenprodukte bei der Herstellung von Kraftstoffzusatzmitteln einzusetzen. In der EP 398 100 ist beschrieben, Oxoöle zu alkoxilieren und diese Produkte insbesondere Treibstoffen für Ottomotoren zuzusetzen. Dabei ist in dem genannten europäischen Patent berichtet, daß die Einlaßventilablagerung durch diesen Benzinzusatz erheblich verringert wird.

Da die Oxoöle Rückstände der Herstellung von z.B. Oxoalkoholen mit mehr als 8 C-Atomen sind und daher in verhältnismäßig großen Mengen anfallen, bestand eine weitere Aufgabe der Erfindung darin, eine weitere Verwendung solcher Oxoöle zu finden. Diese weitere Aufgabe der Erfindung wird dadurch gelöst, daß für die Oxoöle oder die Oxoölfraktionen deren Verwendung als Zusatz zu Kunststoffen aufgezeigt wird.

Insbesondere hat sich gezeigt, daß die Oxoöle in vorteilhafter Weise als Teil von Flüssigstabilisatoren für Kunststoffe, insbesondere halogenhaltige Kunststoffe, chloridhaltige Kunststoffe und insbesondere PVC eingesetzt werden können.

Es hat sich gezeigt, daß bei der Verwendung der Oxoöle eine ganze Anzahl sehr positiver Ergebnisse erzielbar sind. Insbesondere die folgenden sind zu nennen:
- Plate-out wird vermieden bzw. verringert.
- Das Aufschäumverhalten von chemisch getriebenen Kunststoffen, insbesondere chemisch getriebenem PVC, wird positiv beeinflußt; die Porengröße der Schäume und die Verarbeitbarkeit wird positiv beeinflußt.
- Die Transparenz der betreffenden Kunststoffzusammensetzungen, insbesondere von PVC-Kalanderprodukten, wird deutlich verbessert.
- Ein Ausschwitzen der Oxoöle oder sonstiger Stabilisatoranteile, die mit diesem Oxoöl zusammen in den Kunststoff eingearbeitet sind, wurde in einem Schwitztest (7 Tage bei 40 °C, 14 Tage bei 40 °C, jeweils bei 100% Luftfeuchtigkeit) nicht beobachtet.
- Flammpunktprobleme bei Verdünnungen von konzentrierten Flüssigstabilisatoren mit Lösungsmittel, wie sie mit verschiedenen Benzinfraktionen beobachtet wurden, treten bei den Oxoölen nicht auf.
- Die Lagerfähigkeit der mit Oxoölen verdünnten Flüssigstabilisatoren ist im Vergleich zu den mit Benzinfraktionen verdünnten Produkten deutlich verbessert.
- Verwendungen der Kunststoffzusammensetzungen, die Oxoöle enthalten, zeigen bei speziellen Anwendungen im Automobilsektor, insbesondere bei fogging-armen Anwendungen, keine negativen Auswirkungen.
- Ausflockungen von Rezepturbestandteilen, Trübungen, Mischungslücken treten nicht oder in verringertem Maße auf.
- Die Verbrennung erfolgt rückstandsfrei zu CO₂ und Wasser.

Die Oxoöle, die erfindungsgemäß eingesetzt werden können, weisen eine oder mehrere der folgenden Charakteristika auf:
a. Sie bestehen im wesentlichen aus einem Gemisch aus Niedrigsiedern und Hochsiedern, nämlich 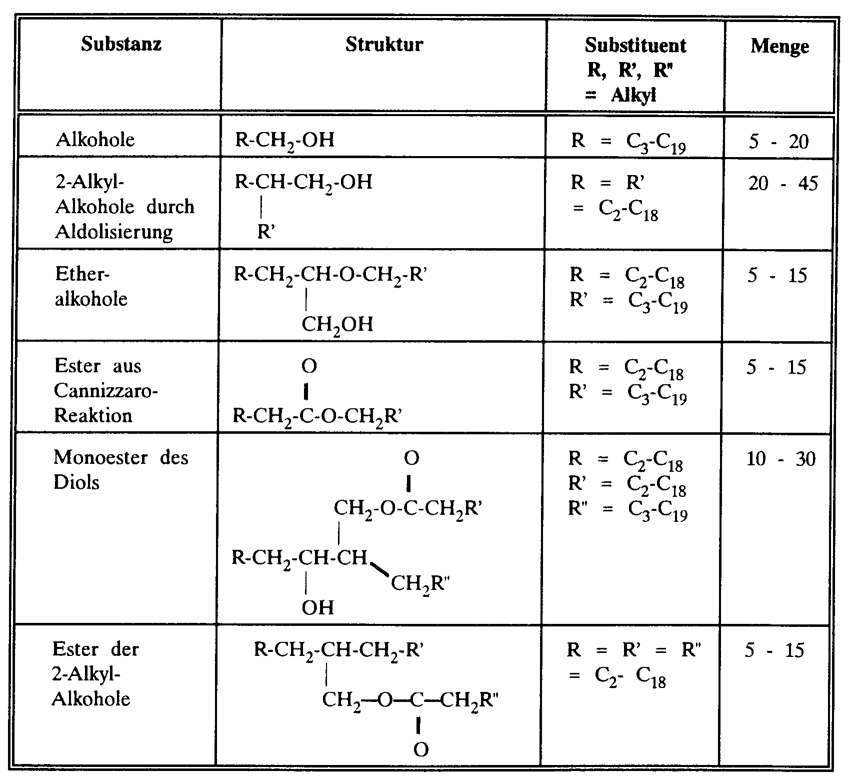 Die Mengen sind Gewichtsteile, vorzugsweise Gewichtsprozent. Sie variieren je nach Fahrweise der Hydroformylierungsreaktion.
b. Sie bestehen aus Alkoholen, Ether-Alkoholen, Estern, Diolen mit Molekulargewichten im Bereich 220 - 500, wobei bei Vorhandensein von zwei O-haltigen Gruppen die entsprechenden O-Atome durch 2 - 3 C-Atome voneinander getrennt sind.
c. Sie sind der Rückstand bzw. eine Fraktion des Rückstands aus dem Reaktionsprodukt der Oxosynthese, insbesondere der Hydroformylierung bzw. Oxierung von C₃-C₁₈-Alkenen oder von C₆-C₁₈-Alkenen, vorzugsweise von Propylen oder Buten, insbesondere n-Buten; vorzugsweise stellen diese Oxoöle den Rückstand, insbesondere den Destillationsrückstand, aus der Herstellung von Oxoalkoholen mit mehr als 8 C-Atomen dar.
d. Sie bestehen im wesentlichen nur aus C, O und H; sie sind insbesondere halogenfrei.
e. Sie haben folgende physikalische Eigenschaften:

| | |
|---|---|
| - Dichte (20 °C): | 0,82 - 0,94 g/cm³ |
| - Viskosität (20 °C): | 20 - 500 mPas |
| - Stockpunkt: | < -10 °C |
| - Siedebereich: | 230 - 360 °C |

Die Verwendung der Oxoöle in Stabilisatoren für Kunststoffe, insbesondere in PVC-Stabilisatoren, mit den zahlreichen vorteilhaften Eigenschaften scheint in einem feinabgestimmten Zusammenspiel der Vielzahl der Oxoölbestandteile mit den Flüssigstabilisatorbestandteilen und den Kunststoffmolekülen zu liegen. Negative Auswirkungen hinsichtlich Einarbeitbarkeit, Verträglichkeit und Mischbarkeit der Stabilisatoren, insbesondere der Erdalkali-Flüssigstabilisatoren und insbesondere der Ba-, Zn- und Ca/Zn-Flüssigstabilisatoren sowie der Verarbeitbarkeit mit PVC und Weichmachern sind vollständig oder weitestgehend vermieden worden.

Die Erfindung wird im folgenden noch näher unter Bezugnahme auf die Beispiele erläutert.

### Beispiel 1

### Kennzeichnung von C₉/C₁₁-Oxoöl

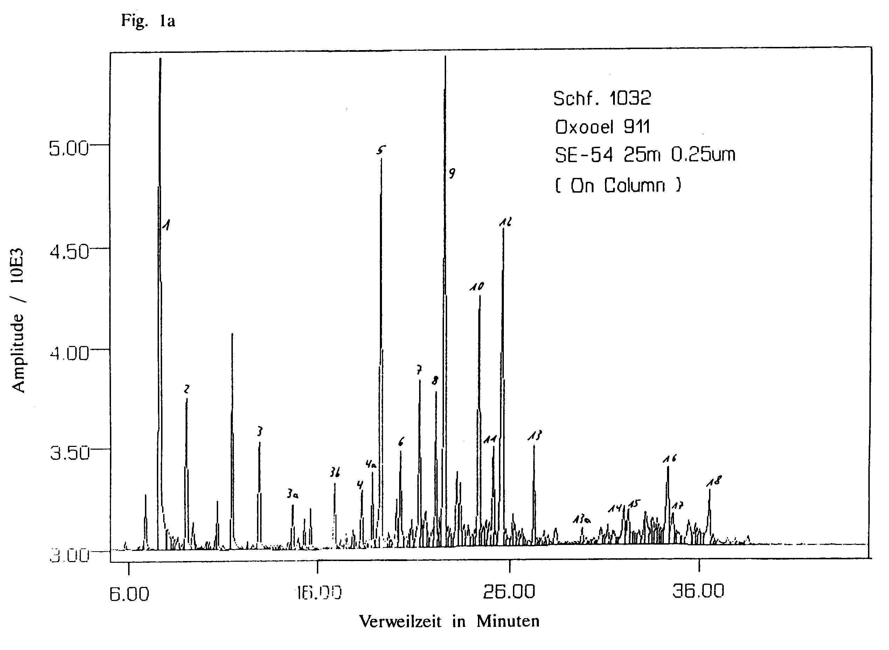

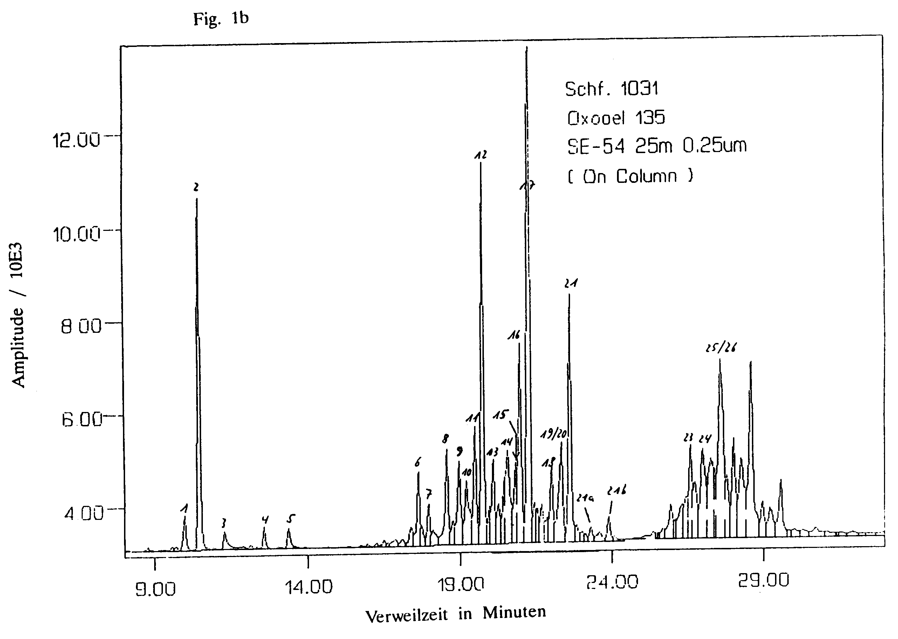

Das genannte Oxoöl, das auch als Oxoöl 911 bezeichnet wird, wurde gaschromatographisch auf einer 50 m SE-54 Fused Silica Kapillare aufgetrennt und mit GC/MS untersucht. In Fig. 1a ist das Gaschromatogramm für Oxoöl 911 gezeigt. In Fig. 1b ist ein entsprechendes Gaschromatogramm für ein als Oxoöl 135 bezeichnetes Oxoöl gezeigt.

Die Hauptkomponenten können Folgeprodukten von geradekettigen Oxoprodukten zugeordnet werden, während die zahlreichen Verbindungen mit geringeren Konzentrationen aus den verzweigten, isomeren Vorstufen nach dem gleichen Schema entstanden sein sollten. Die Strukturen der Hauptkomponenten wurden im wesentlichen aus den Massenspektren abgeleitet.

Im folgenden werden die identifizierten Verbindungstypen und ihre wahrscheinliche Entstehungsart beschrieben:

### Chemische Strukturen im Oxoöl

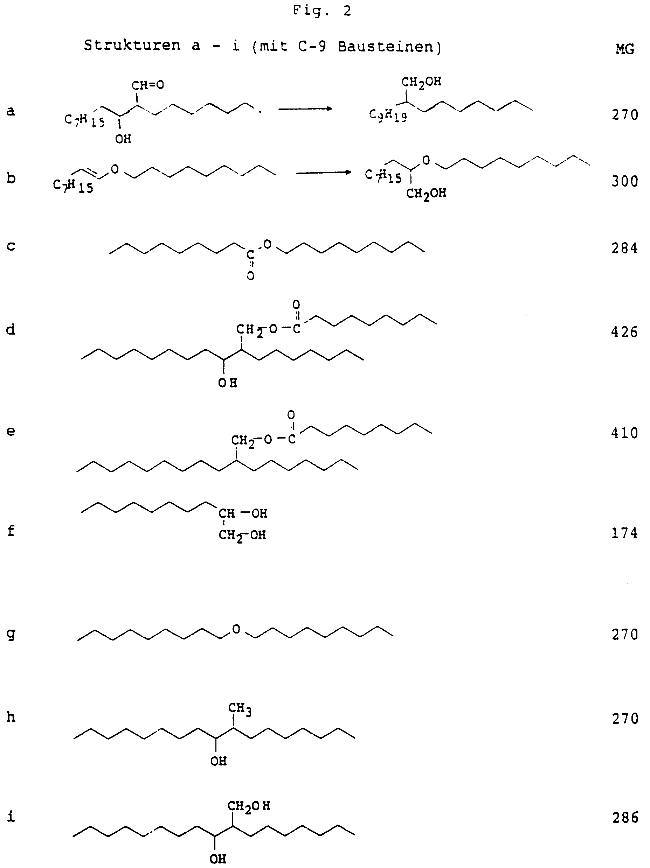

Gefunden wurden die Verbindungstypen a - i, wie sie in Fig. 2 dargestellt sind. In den Gaschromatogrammen der Figuren 1a und 1b sind die Peaks numeriert, und diese Zahlen beziehen sich auf die Verbindungsnummern im folgenden.

### Typ a

Aldolisierung zweier Aldehydbausteine mit Wasserabspaltung und Hydrierung zum 2-alkylverzweigten Alkohol (C-9/9; C-9/11 und C-11/11 führt zu den Verbindungen 5, 9 und 12 im Oxoöl 911).
(Analog: n-Butyraldehyd zu 2-Ethylhexanol.) Die Umsetzung ist in Fig. 2 schematisch angegeben.

### Typ b

Acetalisierung des Aldehyds mit zwei Mol Alkohol, Abspaltung eines Alkoholrestes zum Vinylether und Oxierung der Doppelbindung führt zum Ether-Alkohol. Wahrscheinlich wird das zusätzliche Kohlenstoffatom am C-1 des Vinylethers eingeführt. (C-9/9; C-9/11 und C-11/11 führt zu den Verbindungen 7, 10 und 13.) Die Umsetzung ist in Fig. 2 schematisch angegeben.

### Typ c

Cannizzaro-Disproportionierung zweier Aldehyde. (C-9/9; C-9/11 und C-11/11 führt zu den Verbindungen 4a, 8 und 11.)

### Typ d

Aldolkondensation zweier Aldehydbausteine mit anschließender Cannizzaro-Disproportionierung führt zu monoverestertem Diol. (Analog Hexanol aus n-Butyraldehyd)

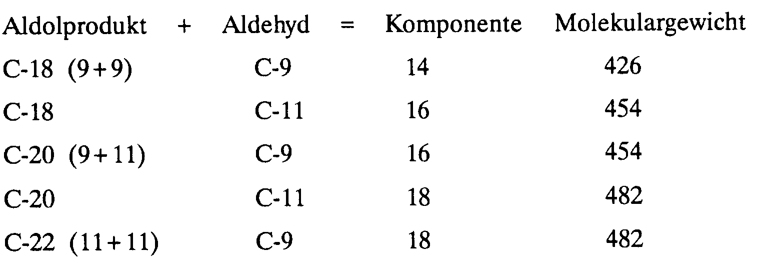

Die Kombination des C-22-Aldols mit dem C-11-Aldehyd wurde nicht gefunden.

### Typ e

Reaktion wie Typ d mit anschließender Wasserabspaltung und Hydrierung der Doppelbindung (Formal: Ester von a).

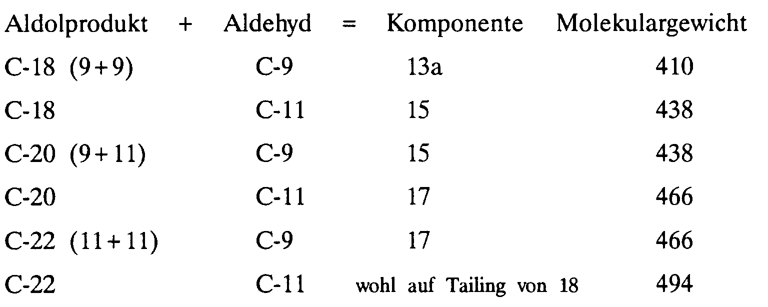

### Typ f

Die Komponenten 2 und 3 sind um 30 Masseneinheiten größer als die C-9/11-Alkohole. Es handelt sich um 1,2- oder 1,3-Diole, die eventuell durch Abspaltung eines Olefins aus dem Etheralkohol b entstanden sind. In einer Leichsiederfraktion des Oxoöls aus Nonanol-N wurde dieser Verbindungstyp nach Silylierung mit GC/MS als Diol charakterisiert.

### Typ g

Die Komponenten 3b und 6 sind Dialkylether (C-9/C-9 und C-9/C-11 mit den Molekulargewichten 270 und 298). Sie entstehen z. B. durch Hydrierung der unter b erwähnten Vinylether.

### Typ h

Die Komponenten 3a und 4 mit den Molekulargewichten 270 und 298 spalten bei chemischer Ionisation im Massenspektrometer sehr leicht Wasser ab; es könnte sich um sekundäre Alkohole handeln, eventuell mit Strukturen, die bei Hydrierung der Aldehydgruppe des Aldols a zur Methylgruppe entstehen.

### Typ i

Diol aus Aldolisierung mit anschließender Hydrierung der Aldehydgruppe (Komponente 12a).

### Vergleich der Gaschromatogramme von Oxoöl 911 und Oxoöl 135

Die Ergebnisse der GC/MS-Kopplung des Oxoöls 911, aufgetrennt auf einer 50 m SE 54 Kapillare werden verglichen mit einer GC/MS-Kopplung des Oxoöls 135, aufgetrennt auf einer 25 m SE-54 Kapillare (MS 93N00614-4493).

("A" ist der C-9-Rest bzw. der C-13-Rest, "B" ist der C-11-Rest bzw. der C-15-Rest in den Oxoölen 911 bzw. 135.)

Peaknumerierung nach den GC/MS-Kopplungen der Oxoöle.

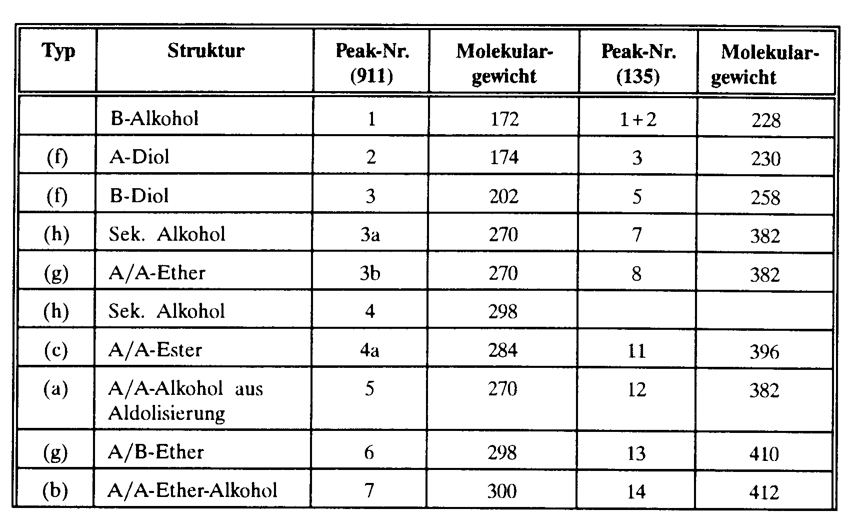

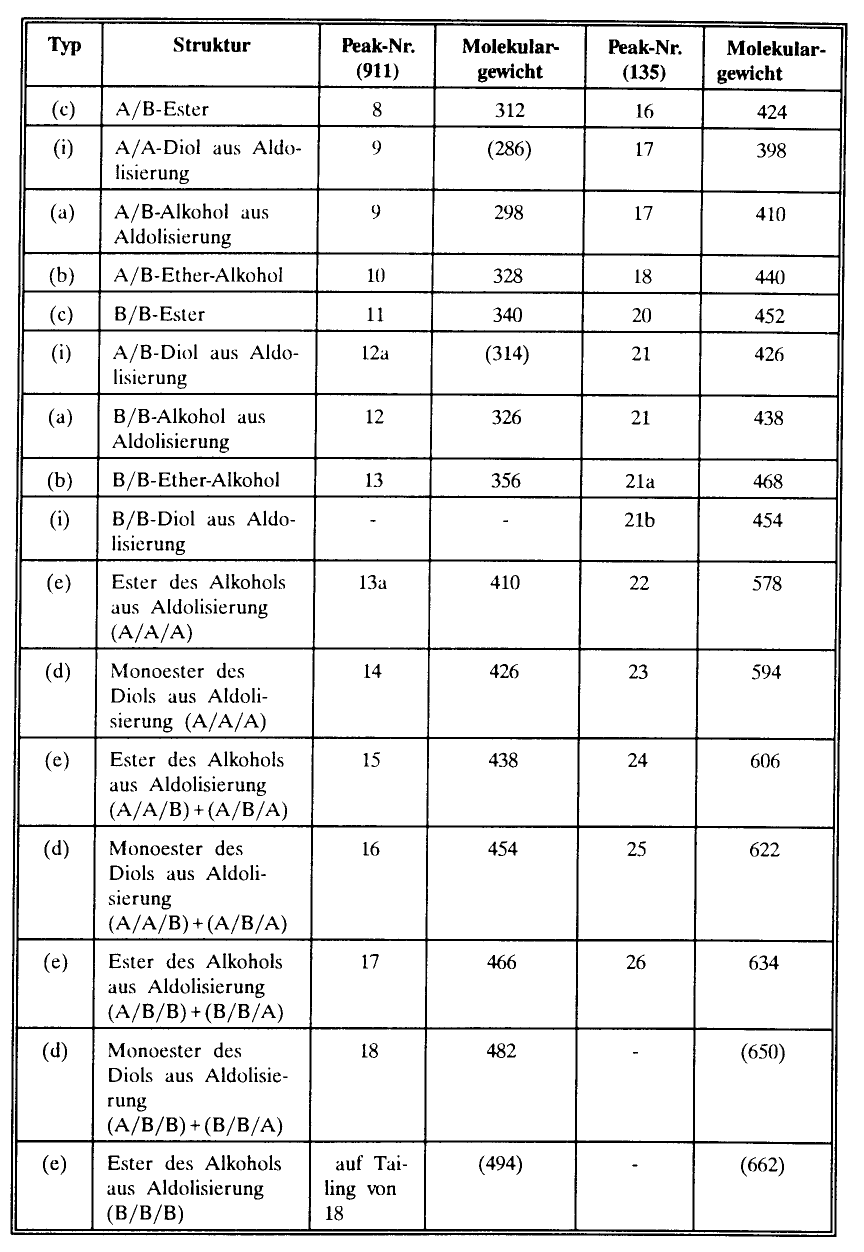

Die in Klammern gesetzten Molekulargewichte sind nur postuliert aber nicht gemessen.

Der gaschromatographische Vergleich des Oxoöls 911 mit dem Oxoöl 135 zeigt starke Analogien, so daß die am Oxoöl 911 mit größerem Aufwand durchgeführte Strukturaufklärung der Einzelkomponenten auf das Oxoöl 135 übertragen werden konnte. Gestützt wird dies durch eine GC/MS-Kopplung des Oxoöls 135, wenn auch im Hochsiederbereich die gaschromatographische Auflösung bei der GC/MS-Kopplung - wahrscheinlich wegen nicht ausreichender Beheizung von Verbindungsleitungen - so stark zurückging, daß keine MS-Spektren mehr erhalten wurden.

Die Hauptkomponenten der Oxoöle wurden mit GC/MS aufgeklärt und durch Normierung der GC/Peakflächen auf 100% quantifiziert. (Quantitative Auswertung über 25 m SE-54 Kapillare mit "cold-on-column"-Dosierung bei Oxoöl 135 und 50 m Ultra-1 Kapillare bei Oxoöl 911.)

Es handelt sich um Alkohole, Ether und Ester aus zwei Molekülen des Oxoproduktes (und aus drei Bausteinen bei den Hochsiedern), die bei Folgereaktionen des Oxoaldehyds entstehen können; teilweise wird ein weiteres C-Atom als Alkohol eingebaut (Typ b und f).

Im einzelnen wurden die Strukturen a - i gefunden (siehe Fig. 2), die aus den geradekettigen Anteilen des Oxoproduktes aufgebaut worden sind. Da anzunehmen ist, daß die verzweigten Isomeren des Oxoproduktes sich chemisch ähnlich verhalten, kann die Zusammensetzung des Gesamtgemisches aus den Konzentrationen der Hauptkomponenten erschlossen werden.

Unberücksichtigt bei der Hochrechnung blieben die Hochsieder und die aus einem einzigen Baustein entstandenen Verbindungen - Oxoalkohol und Typ f.

| **Typ** | **Struktur** | **Gehalte in Flächenanteilen in %** | |
|---|---|---|---|
| | | **Oxoöl 911** | **Oxoöl 135** |
| | Oxoalkohol aus Synthese (Undecanol bzw. Pentadecanol) | 10,7 | 6,1 |
| a. | 2-Alkylalkohol aus Aldolisierung | 29,1 | 27,9 |
| b. | Ether-Alkohol | 13,3 | 6,7 |
| c. | Ester aus Cannizzaro-Reaktion | 8,2 | 11,7 |
| f. | 1,2-Diol | 3,5 | 1,0 |
| g. | Dialkylether | 4,1 | 5,4 |
| h. | Sek. Alkohol | 2,2 | 4,1 |
| i. | Diol aus Aldolisierung | 3,9 | 2,3 |
| | **Hochsieder insgesamt** | **24,9** | **34,8** |
| d. | Monoester des Diol aus Aldolisierung | ca. 12,4 | ca. 17,4 |
| e. | Ester des 2-Alkylalkohols aus Aldolisierung | ca. 12,5 | ca. 17,4 |

Schließlich wurden die beiden Oxoöle noch durch die Mengen funktioneller Gruppen charakterisiert. Das Ergebnis ist folgendes:

| ***Oxoöl 135*** | |
|---|---|
| OH-Zahl | 117 mg KOH/g |
| Säure-Zahl | 1,1 mg KOH/g |
| Carbonyl-Zahl | 1 mg KOH/g |
| Esterzahl | 37 mg KOH/g |

Alkoxylverteilung nach Zeisel:

| | |
|---|---|
| -OC₃H₇ | 1,3 g/100g |
| -OC₁₂H₂₅ | 1,0 g/100g |
| -n-OC₁₃H₂₇ | 8,1 g/100g |
| -n-OC₁₅H₃₁ | 8,7 g/100g |
| -n-OC₁₈H₃₇ | 1,1 g/100g |

| ***Oxoöl 911*** | |
|---|---|
| OH-Zahl | 186 mg KOH/g |
| Säure-Zahl | 4,3 mg KOH/g |
| Carbonyl-Zahl | 2 mg KOH/g |
| Esterzahl | 35 mg KOH/g |

Alkoxylverteilung nach Zeisel:

| | |
|---|---|
| -OC₃H₇ | 1,1 g/100g |
| -OC₁₂H₂₅ | 0,7 g/100g |
| -n-OC₁₃H₂₇ | 7,7 g/100g |
| -n-OC₁₅H₃₁ | 7,7 g/100g |
| -n-OC₁₈H₃₇ | 1,0 g/100g |

Bestimmung der Werte nach folgenden Methoden:
- Säurezahl:: Analysenmethode nach DAB 7 V.3.4.1.
- Esterzahl:: Analysenmethode nach DGF C-V3
- OH-Zahl:: wurde in Anlehnung an die Norm DIN-53240 vom Dezember 1971 bzw. DIN-53240 Teil II vom Dezember 1993 bestimmt
- Carbonylzahl:: wurde in Anlehnung an die FCC-III (Food Chemical Index) bestimmt
- Alkoxylzahl:: Bestimmung nach Zeisel, Protokoll nach SOP Nr. FG 006

### Beispiel 2

### Herstellung der PVC-Flüssigstabilisatoren

PVC der Type Vinoflex® S 7114 (BASF) und Weichmacher (BASF) werden in einem Mischer intensiv durchmischt und dabei mit PVC-Flüssigstabilisatoren gemäß nachfolgenden Beispielen versetzt. Je nach Anwendung und Rezeptur können Zuschläge wie Pigmente, Kreide, verschiedene Gleitmittel etc. zugesetzt werden. Die Mischung für Kalenderprodukte (bzw. Streichverarbeitung und Extrusion) wurde bei 180 °C auf einer Collin-Walze plastifiziert.

| | **Gewichtsteile** | | |
|---|---|---|---|
| Vinoflex S 7114 (bzw. S 6514) | 70 | 80 | 80 |
| Weichmacher DOP | 30 | 20 | 20 |
| Ca/Zn-Flüssigstabilisator | 1.1 (Beispiel 3) | 1.1*) (Beispiel 4) | 2.5*) (Beispiel 5) |
| Thermostabilität (min/180 °C) | 60 | 75 | 110 |
| Farbe (5 min/180 °C) | 10.0 | 5.0 | 5.0 |
| Farbe (30 min/180 °C) | 14.5 | 9.5 | 9.0 |

| | | | |
|---|---|---|---|
| *): weißpigmentierte Halbhart-Folie enthält zusätzlich 10 Gewichtsteile TiO₂ Cl 220, 5 Gewichtsteile Omyalit 95 T, 1 Gewichtsteil K 120 N, 2 Gewichtsteile epoxidiertes Sojabohnenöl | | | |

Die Thermostabilität wurde an einer Preßblatt von 2 mm Dicke in einem Heraeus-Ofen LUT 6050 gemessen. Die Farbe der Preßplatte (Gelbwert, yellowness index) wurde mit einem Gerät Minolta Chromameter CR 200 gemessen.

### Beispiel 3

Eine Stabilisatorzusammensetzung (1000 kg) wurde durch Mischen folgender Bestandteile hergestellt:

| **Name des Stoffes** | **Gew.-%** |
|---|---|
| Essovarsol 155/185 ⁽¹⁾ | 1,1 |
| Tripropylenglykol | 0,8 |
| Vorprodukt I-29 ⁽²⁾ | 6,9 |
| Oxoöl 911 | 30,0 |
| Vorprodukt I-63 ⁽³⁾ | 6,4 |
| Diphenylisodecylphosphit | 16,9 |
| Dibenzoylmethan | 2,2 |
| Irganox 1076 ⁽⁴⁾ | 2,7 |
| Ba-octadecanoat | 10,7 |
| Zn-octadecanoat | 3,1 |
| Ba-p-tert.-Butylbenzoat | 14,8 |
| Zn-p-tert.-Butylbenzoat | 4,4 |

| | |
|---|---|
| ⁽¹⁾ Produkt der Firma Exxon Chemicals, Lösemittel | |
| ⁽²⁾ Barium-Additiv, BASF AG | |
| ⁽³⁾ hydrolisiertes Phosphit, BASF AG | |
| ⁽⁴⁾ Produkt der Firma Ciba-Geigy AG | |

Mit dieser Stabilisatorzusammensetzung wurde ein PVC wie oben angegeben compoundiert.

### Beispiel 4

Eine Stabilisatorzusammensetzung (1000 kg) wurde durch Mischen folgender Bestandteile hergestellt:

| **Name des Stoffes** | **Gew.-%** |
|---|---|
| Tallölfettsäure | 17 |
| Versatic-10-Säure ⁽¹⁾ | 6 |
| Tripropylenglykol | 2 |
| Zinkoxid | 2,5 |
| Bariumhydroxid-Octahydrat | 5 |
| Bariumadditiv I-29 ⁽²⁾ | 11 |
| Diphenyldecylphosphit | 44 |
| Dibenzoylmethan | 3,5 |
| Oxoöl 911 | 10 |
| Antioxidanz Irganox 1076 ⁽³⁾ | 4 |
| optischer Aufheller ⁽⁴⁾ | 0,1 |

| | |
|---|---|
| ⁽¹⁾ Produkt der Firma Shell-Chemie | |
| ⁽²⁾ Produkt der Firma BASF AG | |
| ⁽³⁾ Produkt der Firma Ciba-Geigy AG | |
| ⁽⁴⁾ Produkt der Firma Ciba-Geigy AG, Hoechst AG | |

### Beispiel 5

Eine Stabilisatorzusammensetzung (1000 kg) wurde durch Mischen folgender Bestandteile hergestellt:

| **Name des Stoffes** | **Gew.-%** |
|---|---|
| Tallölfettsäure | 30 |
| 2-Ethylhexansäure | 10 |
| p-tert.-Butylbenzoesäure | 10 |
| Zinkoxid | 3,4 |
| Bariumhydroxid-Octahydrat | 25 |
| Bariumadditiv I-29 ⁽⁴⁾ | 7 |
| Phosphit PNPG ⁽¹⁾ | 11 |
| Dibenzoylmethan | 3,5 |
| Palatinol 911 ⁽²⁾ bzw. Solvesso 100 ⁽³⁾ | 10 |

| | |
|---|---|
| ⁽¹⁾ Produkt der Firma Weston | |
| ⁽²⁾ Produkt der Firma BASF AG | |
| ⁽³⁾ Produkt der Firma Exxon Chemicals | |
| ⁽⁴⁾ Produkt der Firma BASF L & F AG | |

## Patentansprüche

1. Verwendung von Oxoölen als Zusatz zu Kunststoffen.

2. Verwendung nach Anspruch 1, dadurch gekennzeichnet, daß die Oxoöle als Teil von Flüssigstabilisatorzusammensetzungen dem Kunststoff zugesetzt werden.

3. Verwendung nach Anspruch 1 oder 2, dadurch gekennzeichnet, daß der Zusatz bzw. die Flüssigstabilisatorzusammensetzung einem halogenhaltigen Kunststoff, insbesondere einem chloridhaltigen Kunststoff, vorzugsweise PVC, zugesetzt wird.

4. Verwendung nach einem der vorhergehenden Ansprüche, dadurch gekennzeichnet, daß das Oxoöl in einer Menge von 5 - 70 Gew.-% bezogen auf die gesamte Masse aus Kunststoff, Oxoöl und sonstigen Zusätzen eingesetzt wird.

5. Verwendung nach einem der vorhergehenden Ansprüche, dadurch gekennzeichnet, daß das Oxoöl einer konzentrierten Stabilisierungszusammensetzung für den Kunststoff zur Verdünnung zugesetzt wird.

6. Verwendung nach einem der Ansprüche 1 bis 4, dadurch gekennzeichnet, daß das Oxoöl und die Bestandteile einer Stabilisierungszusammensetzung für den Kunststoff zusammen vermischt werden.

7. Verwendung nach einem der vorhergehenden Ansprüche, dadurch gekennzeichnet, daß das Oxoöl eines oder mehrere der folgenden Charakteristika aufweist:
a. Sie bestehen im wesentlichen aus einem Gemisch aus Niedrigsiedern und Hochsiedern.
b. Sie bestehen aus Alkoholen, Ether-Alkoholen, Estern, Diolen mit Molekulargewichten im Bereich 220 - 500, wobei bei Vorhandensein von zwei O-haltigen Gruppen die entsprechenden O-Atome durch 2 - 3 C-Atome voneinander getrennt sind.
c. Sie sind der Rückstand bzw. eine Fraktion des Rückstands aus dem Reaktionsprodukt der Oxosynthese, insbesondere der Hydroformylierung bzw. Oxierung von C₃-C₁₈-Alkenen oder von C₆-C₁₈-Alkenen, vorzugsweise von Propylen oder Buten, insbesondere n-Buten; vorzugsweise stellen diese Oxoöle den Rückstand, insbesondere den Destillationsrückstand, aus der Herstellung von Oxoalkoholen mit mehr als 8 C-Atomen dar.
d. Sie bestehen im wesentlichen nur aus C, O und H; sie sind insbesondere halogenfrei.
e. Sie haben folgende physikalische Eigenschaften:
- Dichte (20 °C): 0,82 - 0,94 g/cm₃
- Viskosität (20 °C): 20 - 500 mPas
- Stockpunkt: < -10 °C
- Siedebereich: 230 - 360 °C.

8. Zusatz für Kunststoffe, gekennzeichnet durch
a. 5 - 70 Gewichtsteile Oxoöl
b. 1 - 30 Gewichtsteile Alkali und/oder Erdalkalisalze von organischen Säuren mit 8 - 18 C-Atomen
c. 0,5 - 5 Gewichtsteile Antioxidanzien
d. 5 - 30 Gewichtsteile Weichmacher
e. 5 - 50 Gewichtsteile organisches Phosphit

9. Zusammensetzung nach Anspruch 8,
dadurch gekennzeichnet,
daß der Bestandteil b ein Zinksalz der Säure enthält, und/oder daß Bestandteil b Salze einer oder mehrerer der folgenden Säuren enthält:
- gesättigte und ungesättigte Fettsäuren
- Benzoesäure
- substituierte Benzoesäure, insbesondere p-tert.-Butylbenzoesäure

10. Zusammensetzung nach einem der Ansprüche 8 oder 9, dadurch gekennzeichnet, daß das Oxoöl wie in einem der vorhergehenden Ansprüche definiert ist.

11. Kunststoffmaterial bestehend aus Kunststoff und Zusätzen, dadurch gekennzeichnet, daß es als einen Zusatz 0,5 - 5 Gewichtsteile Oxoöl bezogen auf 100 Gewichtsteile Kunststoffmaterial enthält.

12. Kunststoffmaterial nach Anspruch 11, dadurch gekennzeichnet, daß es einen Zusatz gemäß einem der auf einen Zusatz für Kunststoff gerichteten Ansprüche enthält.
